(19) Europäisches Patentamt
European Patent Office
Office européen des brevets

(11) **EP 2 584 712 B1**

(12) **EUROPEAN PATENT SPECIFICATION**

(45) Date of publication and mention
of the grant of the patent:
**18.12.2019 Bulletin 2019/51**

(21) Application number: **11795969.2**

(22) Date of filing: **16.06.2011**

(51) Int Cl.:
*H04B 7/0426* *(2017.01)*    *H04L 27/36* *(2006.01)*
*H04W 52/26* *(2009.01)*    *H04B 7/06* *(2006.01)*
*H04L 27/00* *(2006.01)*

(86) International application number:
**PCT/KR2011/004396**

(87) International publication number:
**WO 2011/159103 (22.12.2011 Gazette 2011/51)**

(54) **BROADCAST DATA TRANSMISSION METHOD**

RUNDFUNKDATENÜBERTRAGUNGSVERFAHREN

PROCÉDÉ DE TRANSMISSION DE DONNÉES DE DIFFUSION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.04.2011 KR 20110035727
21.02.2011 KR 20110015183
23.08.2010 KR 20100081521
18.06.2010 KR 20100057899**

(43) Date of publication of application:
**24.04.2013 Bulletin 2013/17**

(73) Proprietor: **Electronics and Telecommunications
Research Institute
Daejeon-si 305-700 (KR)**

(72) Inventors:
• **BAE, Jae Hwui
Daejeon 305-700 (KR)**
• **LEE, Gwang Soon
Daejeon 305-700 (KR)**
• **LEE, Hyun
Daejeon 305-700 (KR)**
• **LEE, Bong Ho
Daejeon 305-700 (KR)**
• **KIM, Young Su
Daejeon 305-700 (KR)**

• **SONG, Yun Jeong
Daejeon 305-700 (KR)**
• **LEE, Soo In
Daejeon 305-700 (KR)**
• **JUNG, Tae Jin
Gwangju 500-757 (KR)**
• **KIM, Jun Ho
Gwangju 500-757 (KR)**
• **KIM, Ho Jun
Gwangju 500-757 (KR)**
• **HUR, Namho
Daejeon 305-700 (KR)**
• **LIM, Hyoung Soo
Daejeon 305-700 (KR)**
• **SEO, Jae Hyun
Daejeon 305-700 (KR)**
• **KIM, Heung Mook
Daejeon 305-700 (KR)**

(74) Representative: **Sieckmann, Dirk Christoph
Betten & Resch
Patent- und Rechtsanwälte PartGmbB
Maximiliansplatz 14
80333 München (DE)**

(56) References cited:
**JP-A- 2009 525 665    KR-A- 20080 080 722
KR-A- 20080 089 493    KR-A- 20090 097 763**

**Description**

Technical Field

Embodiments of the present invention relate to a system for transmitting broadcasting data, and more particularly, to a system for enhancing the receive performance by series connecting a spatial multiplexing system and a precoder in a mobile broadcasting channel environment.

Background Art

In a wireless communication environment, a multiple input multiple output (MIMO) communication system may obtain a high data rate using a plurality of transmit and receive antennas and thus, is currently gaining great attention. In particular, a spatial multiplexing scheme referred as Vertical Bell-labs Layered Space-Time (V-BLAST) may simultaneously transmit independent signal streams via respective transmit antennas, thereby enhancing the spectrum efficiency.

However, when the spatial multiplexing scheme is applied to a mobile broadcasting system, a few problems may occur. Initially, significant performance degradation may occur in an erasure fading channel environment that occurs in a single frequency network (SFN) environment within a broadcasting system. The erasure fading channel environment may correspond to a fading channel in which information of a signal is erased when the signal passes a channel where fading occurs.

In addition, in the case of a channel environment where correlation between transmit antennas and receive antennas occurs within the broadcasting system, an existing scheme may have the performance degradation. This is because the existing spatial multiplexing scheme using multiple transmit and receive antennas is designed based on the assumption that channel values between the transmit antennas and the receive antennas within a mobile communication system are independent. However, unlike the mobile communication system, in the broadcasting system, an occurrence probability of the correlation between the transmit antennas and the receive antennas may be high.

Accordingly, in such channel environment, the existing spatial multiplexing scheme may have a great performance degradation.

US 2007/0195907 A1 discloses a method of transmitting and receiving data using superposition modulation in a wireless communication system having multiple antennas.

More specifically, the method of US 2007/0195907 A1 comprises encoding the at least one inputted data stream by a channel coding scheme, puncturing the at least one inputted coded data stream into at least two sub-streams, layer-modulating the at least two sub-streams using layer-modulation schemes, transmitting the layered-modulated sub-streams via the multiple antennas, wherein transmission power of each antenna is based channel condition, and receiving by at least one user the layered-modulated sub-stream, wherein the each user uses different demodulation scheme.

**Disclosure of Invention**

Objects of the present invention are achieved by subject matter of the claim.

Technical Goals

An aspect of the present invention provides a method that may enhance a data transmission performance in a fading channel.

Another aspect of the present invention also provides a method that may prevent the degradation in the transmission performance of broadcasting data occurring by fading.

Technical solutions

According to an aspect of the present invention, there is provided a method of transmitting broadcasting data, the method including: controlling a transmission power of a data stream, transmitted via each of a plurality of transmit antennas, to be different based on a modulation scheme that is determined to be different for each of the transmit antennas; precoding the data stream of which the transmission power is controlled, using a precoding matrix that is determined based on the modulation scheme; and transmitting the precoded data stream to a receiver via each of the transmit antennas.

According to another aspect of the present invention, there is provided a method of transmitting broadcasting data, the method including: controlling a transmission power of a data stream, transmitted via each of a plurality of transmit antennas, to be different based on a modulation scheme that is determined to be different for each of the transmit antennas; precoding the data stream of which the transmission power is controlled, using a precoding matrix that is determined based on the modulation scheme; shifting a phase of a data stream transmitted via a predetermined transmit antenna among the plurality of transmit antennas; and transmitting the phase-shifted data stream to a receiver via the predetermined transmit antenna.

According to still another aspect of the present invention, there is provided a method of receiving broadcasting data, including: receiving, via a plurality of receive antennas, data streams that are precoded using a precoding matrix that is determined based on a modulation scheme, the modulation scheme being determined to be different for each of a plurality of transmit antennas; and decoding the data streams.

Effect of the Invention

According to embodiments of the present invention, it is possible to enhance a data transmission performance in a fading channel.
According to embodiments of the present invention, it is possible to prevent the degradation in the transmission performance of broadcasting data occurring by fading.

Brief Description of Drawings

FIG. 1 is a diagram illustrating a system for transmitting broadcasting data according to an embodiment of the present invention;
FIG. 2 is a diagram illustrating a system for transmitting broadcasting data according to another embodiment of the present invention;
FIG. 3 is a flowchart illustrating a method of transmitting broadcasting data according to an embodiment of the present invention;
FIG. 4 is a flowchart illustrating a method of transmitting broadcasting data according to another embodiment of the present invention; and
FIG. 5 is a flowchart illustrating a method of receiving broadcasting data according to an embodiment of the present invention.

Best Mode for Carrying Out the Invention

Reference will now be made in detail to embodiments of the present invention, examples of which are illustrated in the accompanying drawings, wherein like reference numerals refer to the like elements throughout. The embodiments are described below in order to explain the present invention by referring to the figures.

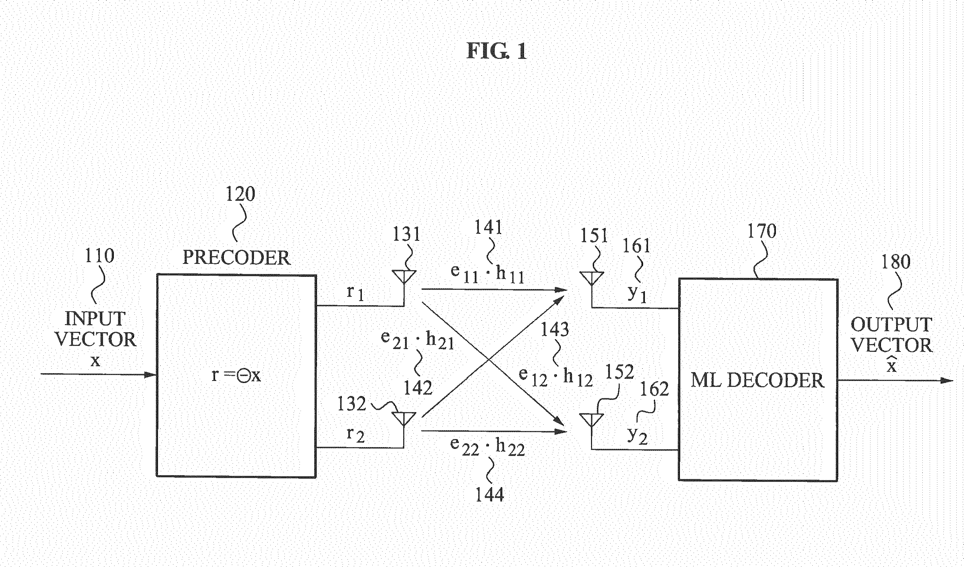

FIG. 1 is a diagram illustrating a system for transmitting broadcasting data according to an embodiment of the present invention.
The proposed system may receive an input vector 110 $x = [x_1, x_2]^T$ including two quadrature amplitude modulation (QAM) signals. Each element of the input vector x may correspond to a portion of a data stream to be transmitted by a broadcasting data transmission apparatus.
A precoder 120 may precode the input vector 110 using a precoding matrix $\Theta$. The precoder 120 may generate a precoded data stream by multiplying the input vector x by the precoding matrix $\Theta$. A signal vector r including the precoded data stream as an element may be defined as Equation 1:

$$[\text{Equation 1}]$$

$$\mathbf{r} = [r_1, r_2]^T = \Theta\mathbf{x}$$

According to an aspect, the precoding matrix $\Theta$ may include a plurality of column vectors. In this instance, the plurality of column vectors may be orthogonal to each other. Each of the column vectors of the precoding matrix $\Theta$ may correspond to a column vector that is defined based on a predetermined rotation angle.
The precoding matrix $\Theta$ including the plurality of column vectors defined based on the predetermined rotation angle may be expressed by Equation 2:

[Equation 2]

$$\Theta = \begin{bmatrix} \cos\theta & -\sin\theta \\ \sin\theta & \cos\theta \end{bmatrix}$$

In Equation 2, each of the column vectors may be defined based on the predetermined rotation angle and the plurality of column vectors may be orthogonal to each other.

Elements of the signal vector r may be transmitted to a broadcasting data reception apparatus via corresponding transmit antennas 131 and 132. Signal vectors may be wirelessly transmitted from the broadcasting data transmission apparatus to the broadcasting data reception apparatus.

The signal vector r may be distorted while passing through radio channels 141, 142, 143, and 144 formed from the broadcasting data transmission apparatus to the broadcasting data reception apparatus. According to an aspect, each of the radio channels 141, 142, 143, and 144 formed from the broadcasting data transmission apparatus to the broadcasting data reception apparatus may correspond to an erasure channel. In this case, in an erasure fading channel environment, when a signal passes a channel where fading occurs, information of the signal may be erased.

The radio channels 141, 142, 143, and 144 corresponding to erasure fading channels may be modeled as expressed by Equation 3:

[Equation 3]

$$\mathbf{h} = \begin{bmatrix} e_{1,1}h_{1,1} & e_{2,1}h_{2,1} \\ e_{1,2}h_{1,2} & e_{2,2}h_{2,2} \end{bmatrix}$$

In Equation 3, $h_{i,j}$ corresponds to a complex fading value between an $i^{th}$ transmit antenna and a $j^{th}$ receive antenna and may have an independent and identically distributed (i.i.d.) Gaussian distribution in which each of a real number portion and an imaginary number portion has the average of "0" and a variance of "0.5". Also, $e_{i,j}$ corresponds to an erasure value between the $i^{th}$ transmit antenna and the $j^{th}$ receive antenna, and may have a value of "0" as a value of $p_e$ probability and has a value of "1" as a value of $(1-p_e)$ probability.

Considering the above description, a received vector $y = [y_1, y_2]^T$ received via a receive antenna, for example, receive antennas 151 and 152 may be expressed according to Equation 4:

[Equation 4]

$$\mathbf{y} = \mathbf{hr} + \mathbf{n}$$

In Equation 4, $n = [n_1, n_2]^T$ denotes a thermal noise vector occurring in each receive antenna. Here, $n_i$ corresponds to an i.i.d. additive white Gaussian noise (AWGN) sample value with respect to an $i^{th}$ receive antenna. Each of a real number portion and an imaginary number portion may have a bi-directional power density of $N_0/2$.

A maximum likelihood (ML) decoder 170 may decode data streams using an ML decoding scheme. For example, the ML decoder 170 may perform ML decoding using a value h of an estimated channel matrix, according to Equation 5:

[Equation 5]

$$\hat{x} = \arg \min_{r} \| y - hr \|^2$$

In Equation 5, $\hat{x}$ denotes an output vector 180 minimizing the received vector y and a Euclidean distance.

According to an aspect, the precoding matrix $\Theta$ may be optimized to maximize the receive performance of the ML decoder 170. When considering the independency and symmetry of two receive antennas 161 and 162 of FIG. 1, the precoding matrix $\Theta$ maximizing the performance of a predetermined receive antenna may also maximize the performance of the whole receive antennas 161 and 162. Accordingly, hereinafter, description will be made based on the precoding matrix $\Theta$ optimized based on only a first receive antenna.

A signal received by the first receive antenna may be expressed by Equation 6:

[Equation 6]

$$y_1 = e_{1,1}h_{1,1}r_1 + e_{2,1}h_{2,1}r_2 + n_1$$

$$= e_{1,1}h_{1,1}(\cos\theta x_1 + \sin\theta x_2) + e_{2,1}h_{2,1}(-\sin\theta x_1 + \cos\theta x_2) + n_1$$

Here, $(e_{1,1}, e_{2,1})$ by erasure fading may have four values of (0, 0), (1, 1), (1, 0), and (0, 1). Hereinafter, a value of the precoding matrix $\Theta$ with respect to each case will be described.

1) When $(e_{1,1}, e_{2,1})$ corresponds to (0, 0):

In this case, all of two transmission signals may be erased and only noise may be present in a received signal. Accordingly, there is no meaning in optimizing a value of the precoding matrix $\Theta$ with respect to the above case.

2) When $(e_{1,1}, e_{2,1})$ corresponds to (1, 1):

In this case, a channel may be considered as a non-erasure channel. Accordingly, Equation 6 may be arranged to Equation 7:

[Equation 7]

$$y_1 = \alpha_1 x_1 + \alpha_2 x_2 + n_1$$

In Equation 7, $\alpha_1$ and $\alpha_2$ correspond to effective channels based on actual channels $h_{1,1}, h_{2,1}$ and a value of the precoding matrix $\Theta$. Due to the unitary characteristic of the precoding matrix $\Theta$, values of $\alpha_1$ and $\alpha_2$ may have an i.i.d. Gaussian distribution. Accordingly, it can be known that the receive performance does not vary according to a change in the value of the precoding matrix $\Theta$.

3) When $(e_{1,1}, e_{2,1})$ corresponds to (1, 0):

In this case, Equation 6 may be rearranged to Equation 8:

[Equation 8]

$$y_1 = e_{1,1}h_{1,1}(\cos\theta x_1 + \sin\theta x_2) + n_1$$

$$= e_{1,1}h_{1,1}s(x_1, x_2) + n_1$$

Referring to Equation 8, a single channel environment where only a channel from the first transmit antenna is present may be considered. An optimal constellation of transmitting four bits in a rectangular structure in the single channel environment may be 16-QAM. Accordingly, in Equation 8, $s(x_1,x_2)$ may need to have a constellation of 16-QAM. Based on this, it can be known that the optimal value of $\theta$ may need to have a value of $\theta = \tan^{-1}(1/2) \pm n\pi/2$.

4) When $(e_{1,1}, e_{2,1})$ corresponds to (0, 1):

Even in this case, it can be known that the optimal value of $\theta$ is $\theta = \tan^{-1}(1/2) \pm n\pi/2$ through analysis similar to the case 3).

In the case 3) and the case 4), the optimal value of $\theta$ may correspond to a value with respect to a 4-QAM modulation scheme and the optimal value of $\theta$ with respect to another modulation order may also be simply induced. For example, when a 16-QAM modulation scheme is employed, the optimal value of $\theta$ may enable $(\cos\theta x_1 + \sin\theta x_2)$ or $(-\sin\theta x_1 + \cos\theta x_2)$ signals to have a 256-QAM constellation. Accordingly, it can be known that the optimal value of $\theta$ corresponds to $\theta = \tan^{-1}(1/4) \pm n\pi/2$.

Also, when considering a predetermined modulation order M-QAM, the optimal value of $\theta$ may correspond to

$$\theta = \tan^{-1}(1/\sqrt{M}) \pm n\pi/2$$

According to an aspect, correlation between transmit antennas and receive antennas may occur. In particular, since a position of a transmission station is relatively higher than a terminal station in a mobile broadcasting system, a probability that the correlation between the transmit antennas and the receive antennas may occur may increase. By controlling a power of each data stream included in an input vector to be different, it is possible to enhance the receive performance even in a channel environment where the correlation exists.

When the power of each data stream included in the input vector x is controlled to be different, the input vector x may be defined as Equation 9:

[Equation 9]

$$\mathbf{x} = [\sqrt{\alpha}x_1, \sqrt{1-\alpha}x_2]^T$$

In Equation 9, $\alpha$ denotes a variable for controlling the transmission power of each data stream, included in the input vector x, to be different and may have a value of between "0" and "1". Since $E\{\|x\|^2\} = 1$, the whole power of the input vector x expressed in Equation 9 may be constant.

The precoder 120 may precode the input vector x of Equation 9 using the precoding matrix $\Theta$. For example, the precoder 120 may generate a precoded data stream by multiplying the input vector x by the precoding matrix $\Theta$.

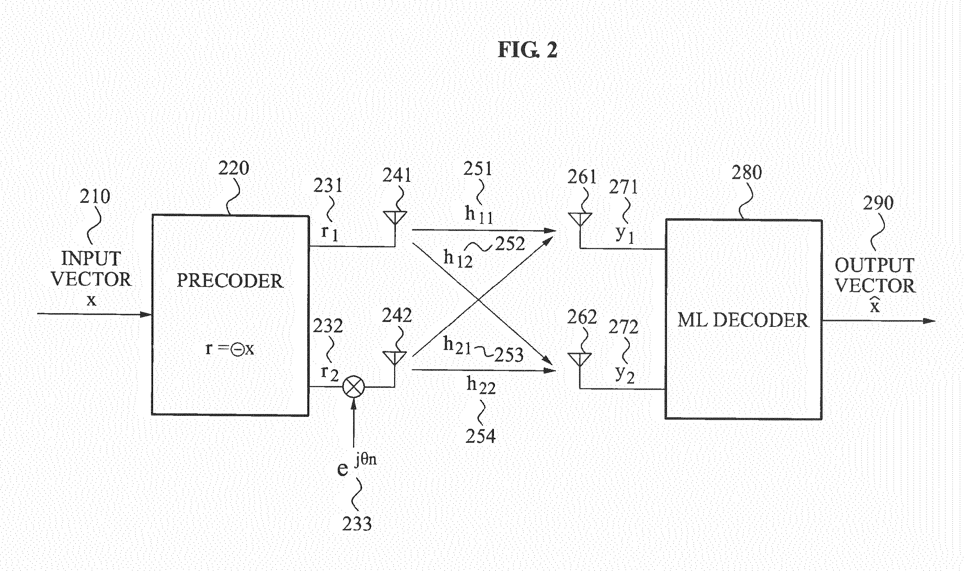

FIG. 2 is a diagram illustrating a system for transmitting broadcasting data according to another embodiment of the present invention. A precoder 220 and an ML decoder 280 included in the broadcasting data transmission system of FIG. 2 may function as similar to the precoder 120 and the ML decoder 170 of FIG. 1.

The broadcasting data transmission system of FIG. 2 may include a phase shifter 223 to shift a phase of a data stream precoded by the precoder 220. The phase shifter 223 may be installed in only an antenna 242, instead of a reference antenna 241. Also, the phase shifter 223 may shift, to a random phase, a phase of a data stream transmitted via the antenna 242.

When the phase of the data stream is shifted to the random phase by the phase shifter 223, correlation between data streams using antennas may decrease. Accordingly, the performance of multiple input multiple output (MIMO) spatial multiplexing may be optimized.

When a modulation scheme of each antenna is different, a rotation angle of a precoding matrix may be optimized, which is described above with reference to FIG. 1. The transmission power of each data stream included in an input vector x may be optimized.

When the input vector x is expressed like Equation 9 $\alpha$ optimizing the transmission power of each data stream and the rotation angle $\theta$ of the precoding matrix according to $\alpha$ may have values expressed by Equation 10:

$$[\text{Equation } 10]$$

$$\alpha = \frac{1}{3}, \theta = 30^{\circ}$$

$$\alpha = \frac{1}{3}, \theta = 45^{\circ}$$

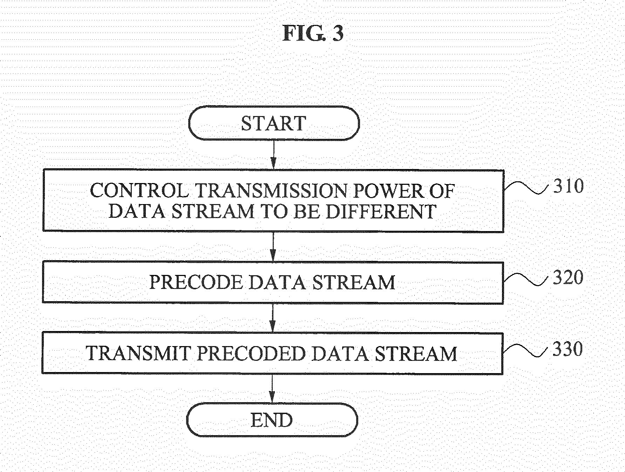

FIG. 3 is a flowchart illustrating a method of transmitting broadcasting data according to an embodiment of the present invention.

In operation 310, a broadcasting data transmission system may control a transmission power of a data stream, included in an input vector x, to be different. The input vector x may be expressed according to Equation 9. In this case, the broadcasting data transmission system may control the transmission power by controlling a value of $\alpha$.

According to an aspect, a data stream may be transmitted to a broadcasting data reception apparatus via a plurality of transmit antennas. In this case, a modulation scheme of each of the antennas may be different. A broadcasting data transmission apparatus may determine a transmission power of the data stream based on the modulation scheme that is determined to be different for each antenna. That is, a size of each element included in the input vector x may be differently determined.

In operation 320, a broadcasting data transmission apparatus may precode the data stream of which the transmission power is controlled, using a precoding matrix that is determined based on the modulation scheme differently determined for each antenna. The broadcasting data transmission apparatus may perform precoding by multiplying the input vector x by the precoding matrix.

According to an aspect, the precoding matrix may include a plurality of column vectors. Each of the column vectors may be determined based on the modulation scheme of each antenna. For example, the rotation angle of the precoding matrix may be determined based on the modulation scheme of each antenna and each column vector may be determined based on the rotation angle of the precoding matrix. The precoding matrix may be determined as expressed by Equation 2.

When the modulation scheme of each antenna corresponds to an M-QAM, the optimal value of the rotation angle $\theta$ may be determined as $\theta = \tan^{-1}(1/\sqrt{M}) \pm n\pi/2$, which is described above.

In operation 330, the broadcasting data transmission apparatus may transmit the precoded data stream to the broadcasting data reception apparatus.

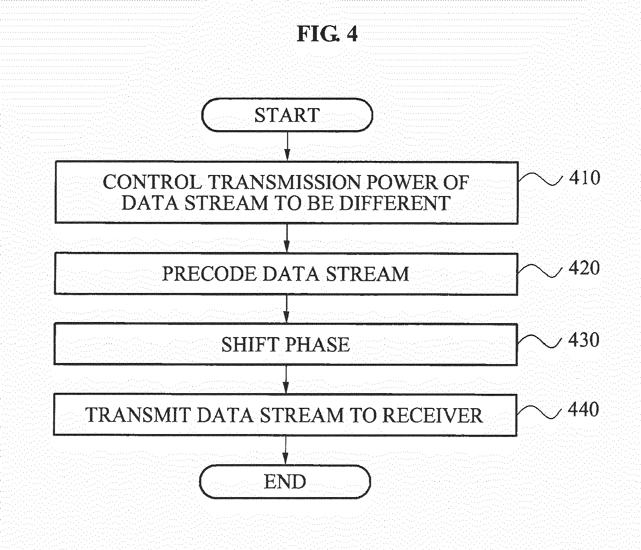

FIG. 4 is a flowchart illustrating a method of transmitting broadcasting data according to another embodiment of the present invention.

Operations 410 and 420 of FIG. 4 may be similar to operations 310 and 320 of FIG. 3 and thus, further description related thereto will be omitted here.

In operation 430, a broadcasting data transmission apparatus may randomly shift a phase of a data stream transmitted via each antenna. When the phase of the data stream is shifted, correlation between data streams transmitted via respective antennas may decrease and the performance of MIMO spatial multiplexing may be optimized.

When the input vector x is expressed like Equation 9 $\alpha$ optimizing the transmission power of each data stream and the rotation angle $\theta$ of the precoding matrix according to $\alpha$ may have values expressed by Equation 10. When $\alpha$ is identical to Equation 10, a transmission power of a data stream transmitted via a first transmit antenna may correspond to two folds of a transmission power of a data stream transmitted via a second transmit antenna.

In operation 440, the broadcasting data transmission apparatus may transmit the precoded data stream to the broadcasting data reception apparatus via a plurality of transmit antennas.

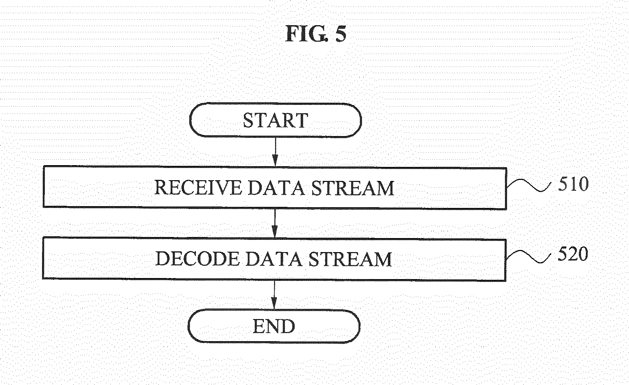

FIG. 5 is a flowchart illustrating a method of receiving broadcasting data according to an embodiment of the present invention.

In operation 510, a broadcasting data reception apparatus may receive data streams via a plurality of receive antennas. The data streams may be transmitted via a plurality of transmit antennas installed in a broadcasting data transmission apparatus. According to an aspect, a modulation scheme may be differently determined for each transmit antenna. In this case, a precoding matrix may be determined based on the modulation scheme that is differently determined for each transmit antenna. An input vector including each data stream may be precoded using the precoding matrix.

According to an aspect, a precoding vector may include a plurality of column vectors orthogonal to each other. According to an aspect, a rotation angle of the precoding vector may be determined based on the modulation scheme that is determined for each transmit antenna. Each column vector may be determined based on the rotation angle of the precoding vector. The precoding vector may be determined according to Equation 2.

In operation 520, the broadcasting data reception apparatus may decode the received data streams. The broadcasting data reception apparatus may decode the data streams using an ML decoding scheme according to Equation 5.

The above-described exemplary embodiments of the present invention may be recorded in computer-readable media including program instructions to implement various operations embodied by a computer. The media may also include, alone or in combination with the program instructions, data files, data structures, and the like. Examples of computer-readable media include magnetic media such as hard disks, floppy disks, and magnetic tape; optical media such as CD ROM disks and DVDs; magneto-optical media such as floptical disks; and hardware devices that are specially configured to store and perform program instructions, such as read-only memory (ROM), random access memory (RAM), flash memory, and the like. Examples of program instructions include both machine code, such as produced by a compiler, and files containing higher level code that may be executed by the computer using an interpreter. The described hardware devices may be configured to act as one or more software modules in order to perform the operations of the above-described exemplary embodiments of the present invention, or vice versa.

Although a few embodiments of the present invention have been shown and described, the present invention is not limited to the described embodiments. Instead, it would be appreciated by those skilled in the art that changes may be made to these embodiments without departing from the principles of the invention, the scope of which is defined by the appended claim.

## Claims

1. A method of transmitting broadcasting data via transmit antennas, the method comprising:

controlling (310) a transmission power of data streams to be different based on a parameter $\alpha$, which is a variable for controlling the transmission power of each data stream and has a value of between "0" and "1", wherein each one of the data streams is included in an input vector X, wherein:

$$\mathbf{x} = [\sqrt{\alpha}x_1, \sqrt{1-\alpha}x_2]^T;$$

precoding (320) the data streams of which the transmission power is controlled, using a precoding matrix that is determined based on a modulation scheme that is determined to be different for each of the transmit antennas; and

transmitting (330) each of the precoded data streams via corresponding each of the transmit antennas, and wherein the precoding matrix is determined according to Equation 1:

[Equation 1]

$$\Theta = \begin{bmatrix} \cos\theta & -\sin\theta \\ \sin\theta & \cos\theta \end{bmatrix}$$

where $\Theta$ denotes the precoding matrix and $\theta$ denotes a rotation angle of the precoding matrix, wherein the rotation angle of the precoding matrix is 45 degree.

## Patentansprüche

**1.** Verfahren zum Senden von Rundfunkdaten mittels Sendeantennen, wobei das Verfahren Folgendes umfasst:

Steuern (310) einer Sendeleistung von Datenströmen, derart, dass sie verschieden sind, auf der Grundlage eines Parameters a, der eine Variable zum Steuern der Sendeleistung jedes Datenstroms ist und einen Wert im Bereich von "0" bis "1" besitzt, wobei jeder der Datenströme in einem Eingangsvektor X enthalten ist, wobei

$$\mathbf{X} = \left[ \sqrt{\alpha} x_1, \sqrt{1-\alpha} x_2 \right]^T ;$$

Vorcodieren (320) der Datenströme, deren Sendeleistung gesteuert wird, unter Verwendung einer Vorcodierungsmatrix, die auf der Grundlage eines Modulationsschemas bestimmt wird, das für jede der Sendeantennen verschieden bestimmt wird; und
Senden (330) jedes der vorcodierten Datenströme mittels der entsprechenden jeweiligen Sendeantennen, wobei die Vorcodierungsmatrix gemäß Gleichung 1 bestimmt wird:

[Gleichung 1]

$$\Theta = \begin{bmatrix} \cos\theta & -\sin\theta \\ \sin\theta & \cos\theta \end{bmatrix},$$

wobei $\Theta$ die Vorcodierungsmatrix bezeichnet und $\theta$ einen Drehwinkel der Vorcodierungsmatrix bezeichnet und der Drehwinkel der Vorcodierungsmatrix 45 Grad ist.

## Revendications

**1.** Procédé de transmission de données de radiodiffusion par l'intermédiaire d'antennes d'émission, le procédé comprenant :

la commande (310) d'une puissance de transmission de flux de données devant être différents sur la base d'un paramètre $\alpha$, qui est une variable pour commander la puissance de transmission de chaque flux de données et a une valeur comprise entre "0" et "1", où chacun des flux de données est inclus dans un vecteur d'entrée X, où :

$$\mathbf{x} = [\sqrt{\alpha} x_1, \sqrt{1-\alpha} x_2]^T ;$$

le précodage (320) des flux de données dont la puissance d'émission est contrôlée, en utilisant une matrice de précodage qui est déterminée sur la base d'un schéma de modulation qui est déterminé comme étant différent pour chacune des antennes d'émission; et
la transmission (330) de chacun des flux de données précodés via chacune des antennes d'émission correspondantes, et dans lequel la matrice de précodage est déterminée selon l'équation 1 :

[Equation 1]

$$\Theta = \begin{bmatrix} \cos\theta & -\sin\theta \\ \sin\theta & \cos\theta \end{bmatrix}$$

où $\Theta$ désigne la matrice de précodage et $\theta$ désigne un angle de rotation de la matrice de précodage, l'angle de rotation de la matrice de précodage étant de 45 degrés.

**FIG. 1**

EP 2 584 712 B1

# FIG. 2

EP 2 584 712 B1

## FIG. 3

```
        ┌─────────────┐
        │    START    │
        └─────────────┘
               │
               ▼
┌──────────────────────────────────┐
│   CONTROL TRANSMISSION POWER OF   │── 310
│    DATA STREAM TO BE DIFFERENT    │
└──────────────────────────────────┘
               │
               ▼
┌──────────────────────────────────┐
│        PRECODE DATA STREAM        │── 320
└──────────────────────────────────┘
               │
               ▼
┌──────────────────────────────────┐
│    TRANSMIT PRECODED DATA STREAM  │── 330
└──────────────────────────────────┘
               │
               ▼
        ┌─────────────┐
        │     END     │
        └─────────────┘
```

## FIG. 4

START

CONTROL TRANSMISSION POWER OF
DATA STREAM TO BE DIFFERENT — 410

PRECODE DATA STREAM — 420

SHIFT PHASE — 430

TRANSMIT DATA STREAM TO RECEIVER — 440

END

# FIG. 5

START

RECEIVE DATA STREAM — 510

DECODE DATA STREAM — 520

END

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070195907 A1